# EUROPEAN PATENT APPLICATION

(11) **EP 1 102 463 A2**
(43) Date of publication of application: **23.05.2001**
(21) Application number: 00121645.6
(22) Date of filing: 04.10.2000
(51) Int. Cl.: H04M 11/06

(54) **Packet switching xDSL system**

(30) Priority: 22.11.1999 KR 9951930
(71) Applicant: Space Cyberlink Inc., a company of the Republic of Korea, Kangnam-ku, Seoul (KR)
(72) Inventor: Kim, In, Seongnam-city, Kyungki-do (KR)
(74) Representative: König, Reimar, Dr.-Ing.

(57) **Abstract**

Disclosed is a packet switching xDSL system. A packet based xDSL modem is connected to a data terminal, and executes xDSL modulation and demodulation operations on the data packet transmitted to the data terminal, and transfers the data packet. An xDSL multiplexer converts the signals transmitted/received to the packet based xDSL modem into the data packet, and performs a multiplexing operation using a packet switching engine, and is connected to a basic network. Therefore, since data format between the packet based xDSL modem and the xDSL multiplexer is a packet type and the data format between the xDSL multiplexer and the basic network is also the packet type, the data can be transmitted without an additional ATM protocol, the expense can be cut, and the transmission band can be guaranteed.

## Description

The present invention relates to a packet switching xDSL system. More specifically, the present invention relates to a packet switching xDSL system for efficiently transmit and receive data without additional protocol conversions and claims priority of the Korean patent application No. 1999-51930 which is hereby fully incorporated in terms of disclosures .

As the Internet is explosively populated and therefore very high-speed broadband communication networks are built and the corresponding services are implemented, techniques for accessing the broadband communication networks for accommodating these are required. The very high-speed communication networks using optic cables can be a solution. but it takes much time and installation expenses for the optic cables to be spread into each house.

Accordingly, recent developments of digital modulation/demodulation theories (e.g., Carrierless Amplitude Modulation Phase Modulation (CAP), Discrete Multi Tone (DMT), and Quadrature Amplitude Modulation (QAM)), digital signal processing (DSP) techniques, and very large scale integration (VLSI) have overcome overall transmission troubles, such as the attenuation, dispersing, and interference which prevent the high-speed digital signal transmission on the copper cables, and made it possible to transmit number of Mbps data so that a new subscriber network method referred to as the Digital Subscriber Lines (DSL) is introduced.

Generally, the xDSL (where, x = M, A, S and V) technique transmits the data of Mbps level on the conventional telephone cables. Demands of the xDSL greatly increase in request of the very high-speed Internet service recently increased. The MDSL, ADSL, SDSL and VDSL are nowadays used as xDSL apparatus, and the current xDSL apparatus are based on the Asynchronous Transfer Mode (ATM) technique.

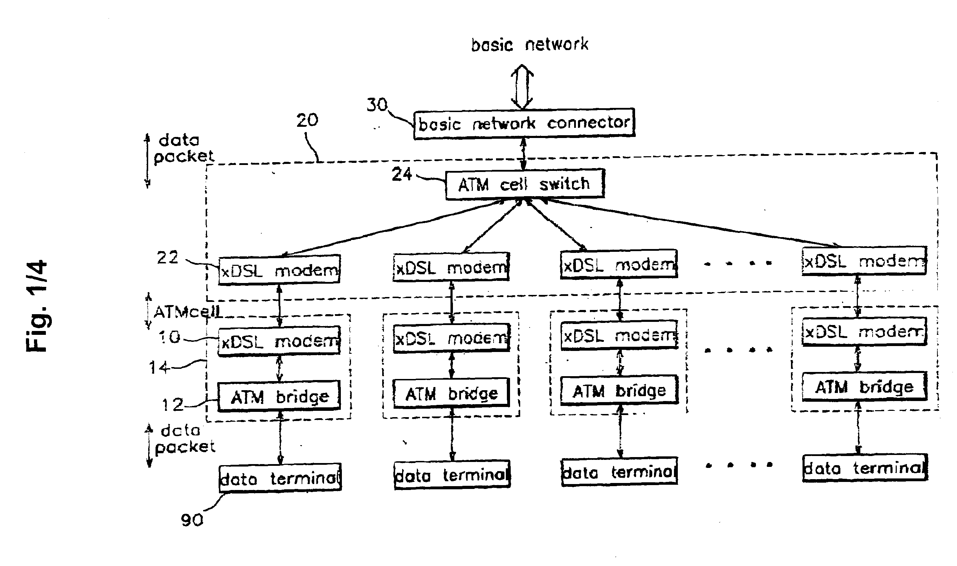

A general xDSL multiplexing system based on the ATM will now be described with reference to FIG. 1.

Referring to FIG. 1, the packet data transmitted via an xDSL modem 14 installed in a plurality of subscribers' houses are converted into ATM cells, and are then transmitted to an ATM cell based MUX 20. These ATM cell data are converted again into the packet type data so as to be transmitted again to the Internet of an IP base, and desirably are transmitted to Wide Area Network (WAN) which is an enlarged wide area system of the Local Area Network (LAN) used in specific groups or areas.

That is, the type of transmitting and receiving the signals between a data terminal 90 in the subscriber's house and an xDSL modem 10 connected to the data terminal 90 is the packet based data, the type of transmitting and receiving the signals between the xDSL modem 10 and an ATM cell based multiplexer 20 is the ATM cell based data, and the type of transmitting and receiving the signals between the ATM cell based multiplexer 20 and a basic network connector 30 is the packet based data.

As noted-above, even when identical packet based data are transmitted and received in the subscribers' houses and on the Internet since most of the current LAN environments are based on the packet, an additional protocol conversion for transmitting and receiving the data to/from all the modems of the subscribers and all ports of the ATM cell multiplexer must be performed. This is a complex conversion of the ATM protocol.

It is an object of the present invention to provide a packet switching xDSL system for transmitting packed based data to a packet based multiplexer on the LAN without additional protocol conversions, and then for the packet based multiplexer to efficiently transmit the data on the Internet without additional protocol conversions.

In one aspect of the present invention a packet switching xDSL system comprises a packet based xDSL modem connected to a data terminal and performing xDSL modulation and demodulation operations on the transmitted/received from/to the data terminal so as to transfer the data packet; and an xDSL multiplexer converting the signals transmitted/received to/from the packet based xDSL modem into data packet, performing a multiplexing by using a packet switching engine, and being connected to a basic network.

The connection method of the basic network is an ATM, an ATM bridge is placed to be connected to a connection part.

The packet based xDSL modem comprises an Ethernet interface being a standardized interface and connected to a personal computer or an Internet television set; a CPU transmitting the data transmitted from a data terminal via the Ethernet interface and controlling the whole system; and an xDSL modem performing an xDSL modulation and demodulation on the data signals so that the data can be transmitted and received on low quality ports.

The xDSL multiplexer comprises a calculator processing the packet unit data transmitted from a subscriber's modem; a packet switch multiplexing the data transmitted from the subscriber's terminal in the calculator and transmitting the multiplexed data to the basic network; a switch buffer temporarily storing the data packet transmitted and received during packet switching; and a basic network connector.

The calculator comprises a traffic shaping coprocessor transferring the data transmitted and received from the subscriber's modem to the packet switch, and when needed, monitoring and controlling the transmitted and received data; a processor memory being a memory of the traffic shaping coprocessor; and an xDSL modem performing necessary modulation and demodulation for data transmission with the subscriber's modem.

The accompanying drawings, which are incorporated in and constitute a part of the specification, illustrate an embodiment of the invention, and, together with the description, serve to explain the principles of the invention:
- FIG. 1: shows a general block diagram of an ATM based xDSL system;
- FIG. 2: shows a packet switching xDSL system according to a preferred embodiment of the present invention;
- FIG. 3: shows a configuration of the packet based xDSL subscriber's modem of FIG. 2; and
- FIG. 4: shows a configuration of the packet based xDSL multiplexer of FIG. 2.

In the following detailed description, only the preferred embodiment of the invention has been shown and described, simply by way of illustration of the best mode contemplated by the inventor(s) of carrying out the invention. As will be realized, the invention is capable of modification in various obvious respects, all without departing from the invention. Accordingly, the drawings and description are to be regarded as illustrative in nature, and not restrictive.

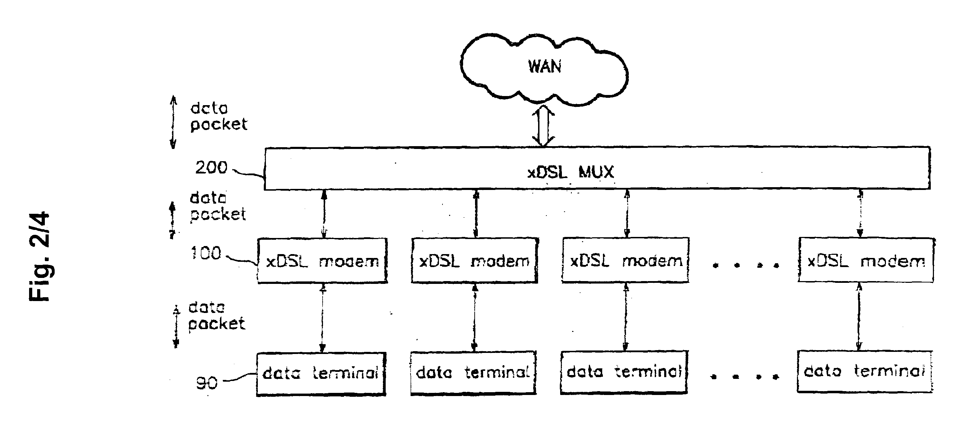

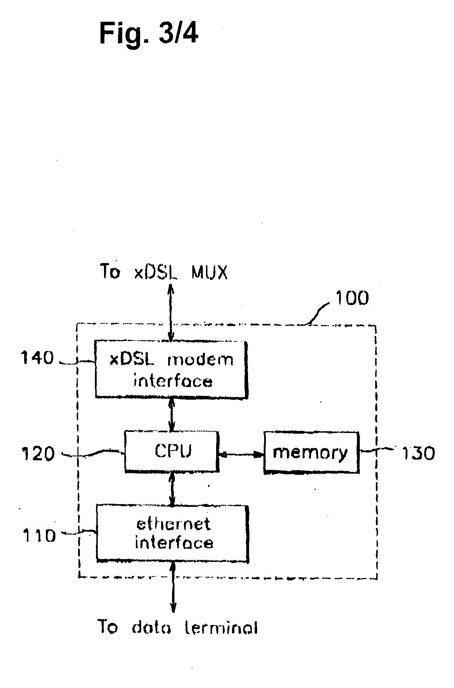

As shown in FIGs. 2 to 4, the packet switching xDSL system according to the preferred embodiment of the present invention comprises a packet based xDSL subscriber's modem 100 and an xDSL multiplexer 200.

The packet based xDSL subscriber's modem 100 comprises an Ethernet interface 110, a Central Processing Unit (CPU) 120, a memory 130 and an xDSL modem 140. The packet based xDSL subscriber's modem 100 is connected to a data terminal 90 such as a television set, and executes an xDSL modulation and demodulation on the data packet transmitted/received from the data terminal 90 so as to transmit the data packet.

In detail, the Ethernet interface 110 is a standardized interface to be connected to a personal computer (PC) and the TV set.

The CPU 120 receives the data from the data terminal 90 via the Ethernet interface 110 and transmits the data to the xDSL modem 140, and also receives the data from the xDSL modem 140 and transmits the data to the Ethernet interface 110, and controls the whole system.

The memory 130 connected to the CPU 120 stores a program for an operation of the CPU 120, and temporarily stores the data packet which are transmitted and received during the transmission of the data packet.

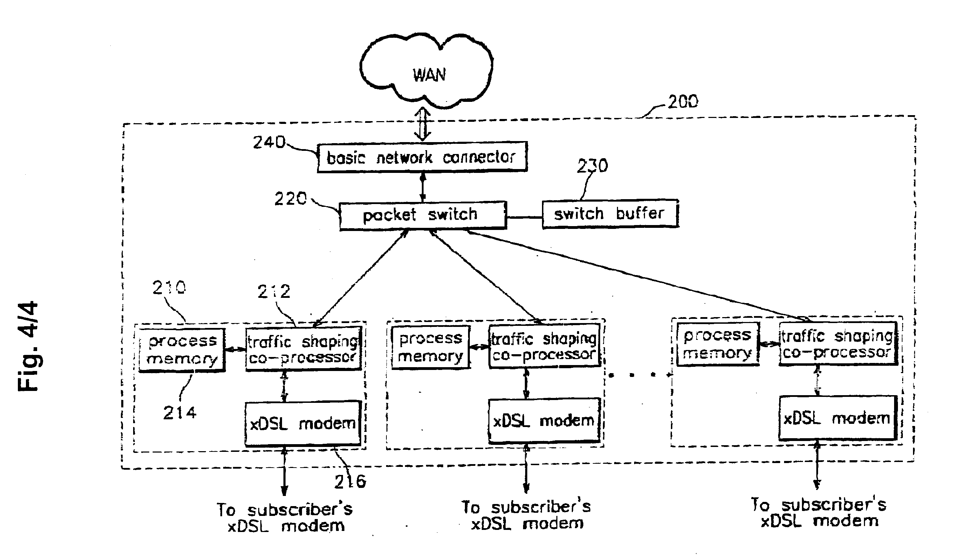

As shown in FIG. 4, the xDSL multiplexer 200 comprises a calculator 210, a packet switch 220, a switch buffer 230, and a basic network connector 240. The xDSL multiplexer 200 converts the signals transmitted/received to the packet based xDSL subscriber's modem 100 into the data packet, and executes a multiplication operation using a packet switching engine, and is connected to the basic network, desirably to the WAN.

In detail, the calculator 210 is a processor which transfers the data transmitted to the subscriber's modem to the packet switch 220. The calculator 210 comprises a traffic shaping coprocessor 212 which monitors and controls the transmitted and received data when needed, a processor memory 214 which is a memory of the coprocessor, and an xDSL modem which executes necessary modulation and demodulation operations for the subscriber's modem and the data transmission, so as to process the packet unit data transmitted from the subscriber's modem.

The packet switch 220 multiplexes the data transmitted from the subscriber's terminal in the calculator 210 and the multiplexed data to the basic network.

The switch buffer 230 temporarily stores the data packet transmitted and received while the data packet is switched.

The basic network connector 240 transfers the data multiplexed by the packet switch 220 to the basic network, and processes and transfers the data according to the sorts of the networks. For example, when the basic network is the ATM, the basic network connector 240 executes a bridge operation from the data packet to the ATM. Here, the bridge of the computer network generally checks an address to where the provided data packet is transmitted, and accurately transmits the data packet to the destination address. If the address of the packet is an address of another network's node, the bridge transmits the data in a same manner of a repeater, and if the address is that of the identical network, this step is finished.

As noted-above, in the case of the xDSL multiplexer comprising the ATM cell switch, the ATM protocol conversion on all the ports is essential, but the present invention removes this ATM conversion so that a transmission band over the ATM switching is guaranteed by using more economic and developed packet switching.

While this invention has been described in connection with what is presently considered to be the most practical and preferred embodiment, it is to be understood that the invention is not limited to the disclosed embodiments, but, on the contrary, is intended to cover various modifications and equivalent arrangements included within the spirit and scope of the appended claims.

## Claims

1. A packet switching x Digital Subscriber Lines (xDSL) system, comprising:
a packet based xDSL modem connected to a data terminal and performing xDSL modulation and demodulation operations on the transmitted/received from/to the data terminal so as to transfer the data packet; and
an xDSL multiplexer converting the signals transmitted/received to/from the packet based xDSL modem into data packet, performing a multiplexing by using a packet switching engine, and being connected to a basic network.

2. The system of claim 1, wherein when the connection method of the basic network is an Asynchronous Transfer Mode (ATM), an ATM bridge is placed to be connected to a connection part.

3. The system of claim 1, wherein the packet based xDSL modem comprises:
an Ethernet interface being a standardized interface and connected to a personal computer or an Internet television set;
a central processing unit (CPU) transmitting the data transmitted from a data terminal via the Ethernet interface and controlling the whole system; and
an xDSL modem performing an xDSL modulation and demodulation on the data signals so that the data can be transmitted and received on low quality ports.

4. The system of claim 1, wherein the xDSL multiplexer comprises:
a calculator processing the packet unit data transmitted from a subscriber's modem;
a packet switch multiplexing the data transmitted from the subscriber's terminal in the calculator and transmitting the multiplexed data to the basic network;
a switch buffer temporarily storing the data packet transmitted and received during packet switching; and
a basic network connector.

5. The system of claim 4, wherein the calculator comprises:
a traffic shaping coprocessor transferring the data transmitted and received from the subscriber's modem to the packet switch, and when needed, monitoring and controlling the transmitted and received data;
a processor memory being a memory of the traffic shaping coprocessor; and
an xDSL modem performing necessary modulation and demodulation for data transmission with the subscriber's modem.
